# FASCICULE DE BREVET EUROPEEN

(11) **EP 2 167 629 B1**
(45) Date de publication et mention de la délivrance du brevet: **03.01.2018**
(21) Numéro de dépôt: 08806012.4
(22) Date de dépôt: 17.06.2008
(51) Int. Cl.: C12G 1/022, C12H 1/14

(54) **Utilisation de tanins d'Acacia catechu en oenologie**
Verwendung von Tanninen aus Acacia catechu in der Önologie
Use of tannins from Acacia catechu in oenology

(30) Priorité: 19.06.2007 FR 0755857
(43) Date de publication de la demande: 31.03.2010
(73) Titulaire: Biolaffort, 33100 Bordeaux (FR)
(72) Inventeur: MARQUETTE, Bruno, F-33880 Saint Caprais De Bordeaux (FR); LAFFORT, Jean-François, F-33800 Bordeaux (FR)
(74) Mandataire: Ipside
(86) Numéro de dépôt international: PCT/FR2008/051077
(87) Numéro de publication internationale: WO 2009/004242

(56) Documents cités:
- EP-A- 0 118 990
- EP-A- 1 306 402
- WO-A-00/66705
- WO-A-99/63048
- WO-A-2006/029484
- CN-A- 101 072 815
- GB-B- 2 435 166
- JP-A- 9 051 791
- STEPHANOPOULOS, O. ET AL.: "Retsina and the yeasts used in its production" VINI D'ITALIA, vol. 14, no. 81, 1972, pages 471-473; 475-476, XP008086246
- PROESTOS C ET AL: "High performance liquid chromatography analysis of phenolic substances in Greek wines" FOOD CONTROL, BUTTERWORTH, LONDON, GB, vol. 16, no. 4, avril 2005 (2005-04), pages 319-323, XP004656211 ISSN: 0956-7135
- GIACOMO CITRON: "Composizione dei tannini impiegati in enologia", INFORMATORE AGRARIO, EDIZIONE L'INFORMATORE AGRARIO, VERONA, IT, no. 13, 1 January 2006 (2006-01-01), pages 51-54, XP003029844, ISSN: 0020-0689
- Manuela Gómez-Míguez ET AL: "Influence of Different Phenolic Copigments on the Color of Malvidin 3-Glucoside", Journal of Agricultural and Food Chemistry, vol. 54, no. 15, 1 July 2006 (2006-07-01), pages 5422-5429, XP055357616, US ISSN: 0021-8561, DOI: 10.1021/jf0604586
- A. B. Bautista-Ortin ET AL: "Improving colour extraction and stability in red wines: the use of maceration enzymes and enological tannins", INTERNATIONAL JOURNAL OF FOOD SCIENCE AND TECHNOLOGY., vol. 40, no. 8, 1 October 2005 (2005-10-01), pages 867-878, XP055357624, GB ISSN: 0950-5423, DOI: 10.1111/j.1365-2621.2005.01014.x

## Description

La présente invention concerne l'utilisation de tanins particuliers pour un usage en oenologie.

Les tanins sont des composés phénoliques présents dans la majorité des végétaux. Certains d'entre eux sont connus depuis des siècles et sont utilisés dans de nombreux domaines.

Les tanins trouvent notamment diverses applications en oenologie. On les utilise par exemple pour clarifier le vin, absorber des constituants indésirables, stabiliser la matière colorante ou encore améliorer la structure des vins. On connait notamment la demande de brevet EP. 1.306.402 qui décrit l'utilisation de tanins comme antioxydant, antibactérien et stabilisant du vin.

Les tanins employés en oenologie appartiennent à deux familles : les tanins hydrolysables et les tanins condensés.

Parmi les tanins hydrolysables, on utilise couramment des tanins ellagiques, qui ont pour origine végétale essentiellement le bois de chêne ou de châtaigner, et des tanins galliques qui peuvent provenir de différentes espèces de bois, de fruits ou encore d'une hypertrophie des tissus végétaux telle que la noix de la galle.

Les tanins condensés, quant à eux, sont particulièrement utilisés en oenologie pour stabiliser la matière colorante des vins au cours du temps.

Cette stabilité doit être assurée par deux phénomènes : la polymérisation des tanins, c'est-à-dire l'association des tanins entre eux, et la condensation des tanins avec les anthocyanes du raisin. Cette réaction est importante pour le vieillissement des vins car une anthocyane sous forme libre est sensible à la température, à la lumière et à l'oxydation, ce qui peut entraîner sa dégradation et par conséquent une diminution de la couleur des vins.

On sait que les tanins issus du raisin sont extrêmement efficaces pour stabiliser la matière colorante des vins mais sont parfois présents à l'état naturel dans des proportions insuffisantes par rapport aux anthocyanes dans le moût ou le vin. Il faut alors compenser cette déficience de la nature par le rajout de tanins condensés exogènes.

Pourtant, malgré leurs qualités, les tanins de raisin sont très peu employés car ils sont très onéreux. En outre, ils contiennent des acides phénols, en particulier des acides paracoumarique et férulique, qui forment dans le vin des dérivés phénolés indésirables responsables d'une dégradation organoleptique notamment de défauts olfactifs. Le document de Citron et al., dans Informatore Agrario, n°13, pp 51-54, 2006, décrit des propriétés oenologiques de tanins proanthocyanidiques extraits d'espèces botaniques, et précise qu'il est souhaitable que de telles substances secondaires y soient présentes en faible quantité.

C'est pourquoi on a cherché des substituts au tanin de raisin.

Actuellement, les seuls succédanés du tanin de raisin connus et utilisés en oenologie sont des tanins proanthocyanidiques de type résorcinol extraits de Quebracho et de Mimosa, répondant à la formule suivante :

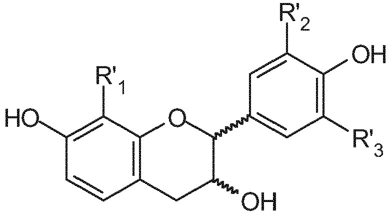

Toutefois ces tanins ne sont pas satisfaisants pour stabiliser correctement la matière colorante des vins.

Sur les figures la à 1c, on a comparé l'efficacité de ces tanins avec celle des tanins de raisin, pour stabiliser la matière colorante des vins, en étudiant la cinétique des associations entre les tanins par l'intermédiaire d'acétaldéhyde ou d'éthanal. En effet, l'aptitude des tanins à se polymériser peut être évaluée par la mesure du trouble formé au cours du temps après l'ajout d'acétaldéhyde à une solution de tanins. On mesure l'apparition du trouble dans une solution hydroalcoolique jusqu'à l'obtention d'un maximum. Plus le trouble formé est important rapidement, plus le tanin est efficace pour l'effet recherché.

Les tanins sont testés à une concentration de 3g/L, pour deux volumes différents d'acétaldéhyde (200 et 400□L). Trois mesures ont été effectuées pour chaque échantillon avec un néphélomètre dans des cuves de 0,9mm de diamètre.

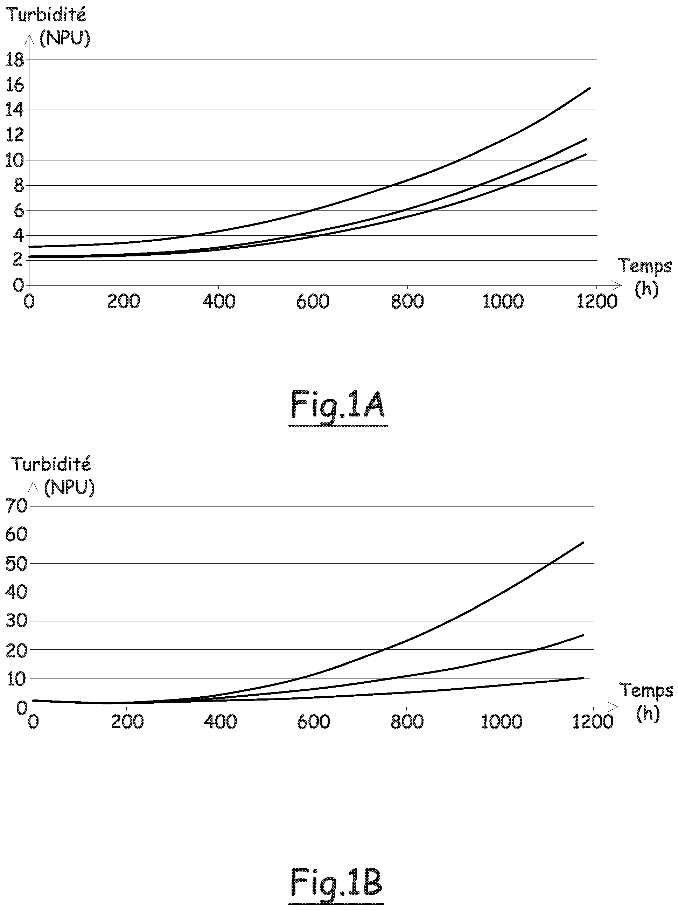

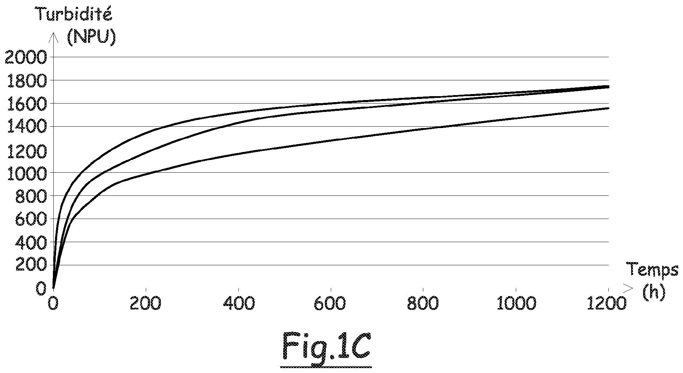

Les résultats obtenus montrent que les tanins de Mimosa (figure la) et les tanins de Quebracho (figure 1b) ne forment pas de trouble ou très peu, alors que les tanins de raisin (figure 1c) réagissent et précipitent rapidement.

Aussi, la présente invention vise à pallier les inconvénients de l'art antérieur en proposant d'utiliser des tanins ayant de bonnes qualités oenologiques, en particulier pour stabiliser la matière colorante des vins, tout en ne présentant pas les inconvénients du tanin de raisin.

A cet effet l'invention a pour objet l'utilisation en tant que produit oenologique d'au moins un tanin proanthocyanidique de type phloroglucinol contenant moins de 10ppm (partie par million) d'acides phénols de type acide paracoumarique et/ou acide férulique, répondant aux caractéristiques de la revendication 1.

Ce tanin peut être utilisé sur un moût de raisin, un moût encore en fermentation ou un vin afin de stabiliser la matière colorante. Il peut également être utilisé pour améliorer la structure d'un vin, pour faciliter la clarification d'un vin en synergie avec un clarifiant, pour absorber des constituants protéiques indésirables du vin, pour une action antibactérienne et/ou pour une action antioxydante dans un vin.

L'invention est maintenant décrite en détail en regard d'exemples non limitatifs, de tests, et des dessins annexés sur lesquels :
- la figure la représente l'évolution du trouble formé entre des tanins de Mimosa et l'acétaldéhyde au cours du temps,
- la figure lb représente l'évolution du trouble formé entre des tanins de Quebracho et l'acétaldéhyde au cours du temps,
- la figure 1c représente l'évolution du trouble formé entre des tanins de Raisin et l'acétaldéhyde au cours du temps,
- la figure 2 représente l'action de l'éthanal sur la turbidité de solutions de tanins à pH 3,3 au cours du temps,
- la figure 3 représente le dosage par densité optique DO 640, des catéchines, épicatéchines et leurs dérivés présents dans des tanins par la réaction à la 4-diméthylaminocinnamaldéhyde,
- la figure 4 représente l'évolution de la couleur rouge d'une solution substitu du vin lorsqu'on ajoute de l'anhydride sulfureux en présence et en absence de tanins d'Acacia Catechu, et
- la figure 5 représente la mesure de la turbidité de solutions d'anthocyane au bain marie à 80°C, en présence et en absence de tanins d'Acacia Catechu.

La présente invention vise l'utilisation pour un usage en oenologie de tanins proanthocyanidiques de type phloroglucinol dont les monomères répondent à la formule (I) suivante : 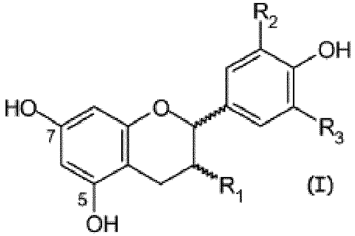 dans laquelle R1, R2 et R3 représentent indépendamment soit un hydrogène (-H), soit un groupement hydroxyle (-OH), selon la revendication 1.

Les tanins utiles selon l'invention contiennent entre 0 et 10ppm d'acides phénols de type acide paracoumarique et/ou acide férulique.

Les tanins utiles selon l'invention sont des procyanidines.

Les tanins utiles selon l'invention sont riches en monomères/unités de formule (I) avec R1 = R2 = OH et R3 = H.

En particulier les tanins utiles selon l'invention sont des tanins riches en monomères de (+)catéchine et/ou de sa forme isomérique (-)épicatéchine et/ou de leurs dérivés, représentés par la formule II suivante : 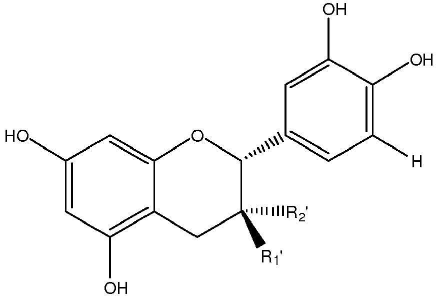 dans laquelle,
R1' = OH et R2' = H pour la (+)catéchine et ses dérivés, et
R1' = H et R2' = OH pour la (-)épicatéchine et ses dérivés.

Les tanins utiles selon l'invention sont extraits d'Acacia Catechu appartenant aux Fabaceae.

Un tanin utile selon l'invention est un tanin comprenant au moins 30% d'unités (+)catéchine et/ou ses dérivés par rapport au total d'unités (+)catéchine, (-)épicatéchine et leurs dérivés constituant ledit tanin, extrait d'Acacia Catechu.

De façon préférée, il s'agit d'un tanin comprenant au moins 50% de (+)catéchine et/ou ses dérivés par rapport au total de (+)catéchine, (-)épicatéchine et leurs dérivés constituant ledit tanin, encore plus préférentiellement au moins 70%.

L'extraction des tanins peut se faire par les moyens classiquement employés dans le domaine, soit à l'eau, soit par des solvants comme l'alcool ou l'éther, soit par des systèmes enzymatiques.

Avantageusement, les tanins selon l'invention présentent de bonnes capacités d'interaction et de combinaison avec les anthocyanes du vin. Ils sont particulièrement efficaces pour stabiliser la matière colorante des vins.

En effet, au cours de l'élevage des vins, notamment lors de l'élevage en barrique, une petite quantité de l'éthanol s'oxyde en acétaldéhyde (ou éthanal).

Cet éthanal est capable de réagir avec les monomères des tanins de type catéchiques ou épicatéchiques ou leurs dérivés utiles selon l'invention, pour former un pont éthanal et fixer les anthocyanes. Les anthocyanes fixées par cette combinaison sont beaucoup plus résistantes à la dégradation, ce qui permet de stabiliser la couleur des vins.

C'est le positionnement des groupements hydroxyles en position 5 et 7 sur les monomères des tanins qui rend ces molécules extrêmement réactives en présence d'éthanal pour réaliser le pont éthanal et fixer des anthocyanes. En effet cette configuration des molécules utiles selon l'invention, différente de celle des tanins de Quebracho et de Mimosa, permet la délocalisation de charges négatives, comme représenté dans le schéma ci-dessous, et par conséquent l'association de la molécule avec l'éthanal qui, dans un milieu acide comme le moût ou le vin forme un carbocation chargé positivement.

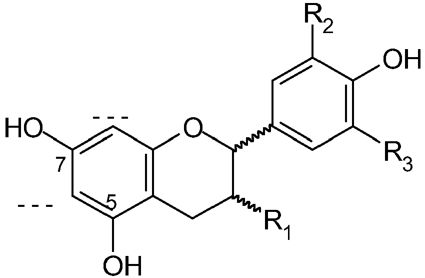

La réaction de condensation des tanins selon l'invention avec les anthocyanes du raisin peut être illustrée par un exemple de condensation entre un tanin dont la molécule de base est la catéchine, et une anthocyane, le malvidine-3-monoglucoside, qui s'effectue selon le schéma réactionnel suivant :

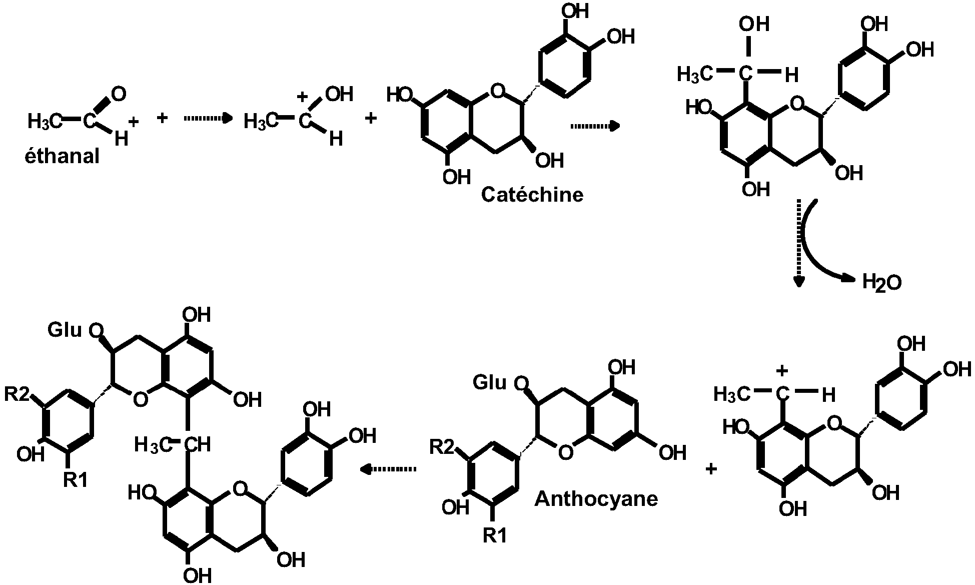

Cette même réaction peut bien entendu se réaliser avec la forme isomérique (-)épicatéchine et ses dérivés.

Selon un autre aspect, l'éthanal libéré au cours de l'élevage des vins, permet également la formation de polymères de tanins liés entre eux par des ponts éthyls en C4-C6 ou C4-C8. Ces polymères deviennent rapidement insolubles et précipitent au-delà d'une certaine taille.

Des tests ont été réalisés pour montrer l'efficacité de tanins utiles selon l'invention et de les comparer aux tanins actuellement utilisés.

Des expérimentations par néphélométrie ont été réalisées pour étudier la cinétique des associations entre les tanins selon l'invention par l'intermédiaire de l'éthanal.

L'aptitude des tanins à se polymériser a été évaluée par la mesure du trouble formé au cours du temps après l'ajout d'acétaldéhyde à une solution de tanins. On mesure l'apparition du trouble dans une solution hydroalcoolique jusqu'à l'obtention d'un maximum, ce qui permet de préciser la réactivité des molécules entre elles en présence d'éthanal et de préciser leur aptitude à former des pigments polymérisés avec les anthocyanes du vin.

Le protocole opératoire est le suivant.

Les tanins sont extraits à l'eau à température dirigée, puis sont ensuite filtrés et concentrés avant d'être séchés par atomisation.

Ils sont incorporés dans une solution hydroalcoolique à raison d'une concentration de 3g/L.

Le volume d'acétaldéhyde testé est de 500 µL.

A chaque temps T, 3 mesures sont effectuées pour chaque échantillon à l'aide d'un néphélomètre dans des cuves de 0,9mm de diamètre.

Les tanins testés utiles selon l'invention sont des tanins extraits d'Acacia Catechu. Sont également testés des tanins de feuilles de Camélia Sinensis et d'écorce de Pin.

En parallèle, des extraits de Quebracho et de Mimosa, ainsi que des tanins de Raisin ont également été testés.

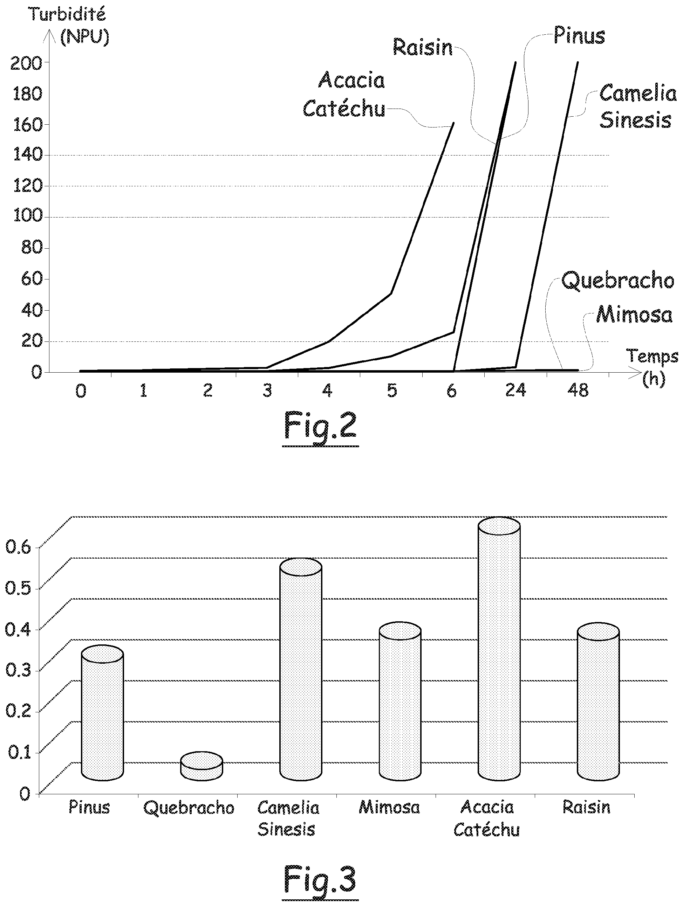

Les résultats obtenus sur 72 heures sont présentés sur la figure 2.

On constate que le tanin d'Acacia Catechu présente une excellente réactivité et se polymérise sous l'effet de l'éthanal encore plus rapidement que le tanin de raisin.

Le tanin d'écorce de Pinus et le tanin de Camélia Sinensis se polymérisent également rapidement en présence d'éthanal et saturent le turbidimètre respectivement au bout de 6 heures et 24 heures.

Par contre on constate que les tanins de Quebracho et de Mimosa n'ont pratiquement pas évolué même après 72 heures de réaction.

Les résultats obtenus montrent également une différence de réactivité entre les tanins d'Acacia Catechu et d'écorce de Pinus d'une part et le tanin de Camélia Sinensis d'autre, qui s'explique par le fait que le tanin d'Acacia Catechu et celui d'écorce de Pinus sont très riches en unités (+)catéchines et ses dérivés, alors que le tanin de Camélia Sinensis contient essentiellement la forme (-)épicatéchine et ses dérivés, forme beaucoup moins réactive que la (+) catéchine.

C'est pourquoi la présente invention réside dans l'utilisation de tanins comprenant au moins 30% de (+) catéchine et/ou ses dérivés par rapport au total de (+) catéchine, (-) épicatéchine et leurs dérivés, extraits d'Acacia Catechu.

La figure 3 illustre le dosage de catéchine et épicatéchine dans des tanins issus d'Acacia Catechu, de Camélia Sinensis et de Pin, en comparaison au dosage de catéchine et épicatéchine dans des tanins de raisin, et des tanins de Quebracho et de Mimosa.

Les tanins ont été extraits à l'eau à température dirigée, puis filtrés et concentrés avant d'être séchés par atomisation. Ils ont été incorporés dans des solutions aqueuses à raison de 100mg/l, diluées au 1/4, et le dosage des catéchines et épicatéchines est réalisé par la réaction à la 4-diméthylaminocinnamaldéhyde. Les résultats sont donnés en densité optique DO 640.

On constate que les tanins issus d'Acacia Catechu, de Camelia Sinensis et de Pinaceae sont riches en catéchine et épicatéchine, comme le tanin de raisin. En revanche, les tanins de Quebracho et de Mimosa ne contiennent que très peu de tanin ayant pour base la catéchine et l'épicatéchine ce qui explique notamment leur absence d'interaction avec l'éthanal.

Par ailleurs, les capacités d'interaction et l'action stabilisante des tanins issus d'Acacia Catechu ont également été testées.

L'expérimentation a été réalisée sur une solution modèle composée d'anthocyanes dosée à 2g/l dans un milieu synthétique classique qui reflète le milieu du vin. Ce milieu a été supplémenté en éthanal, dans une concentration relativement faible, 0,01%, afin que les tanins puissent s'associer aux anthocyanes sans précipiter.

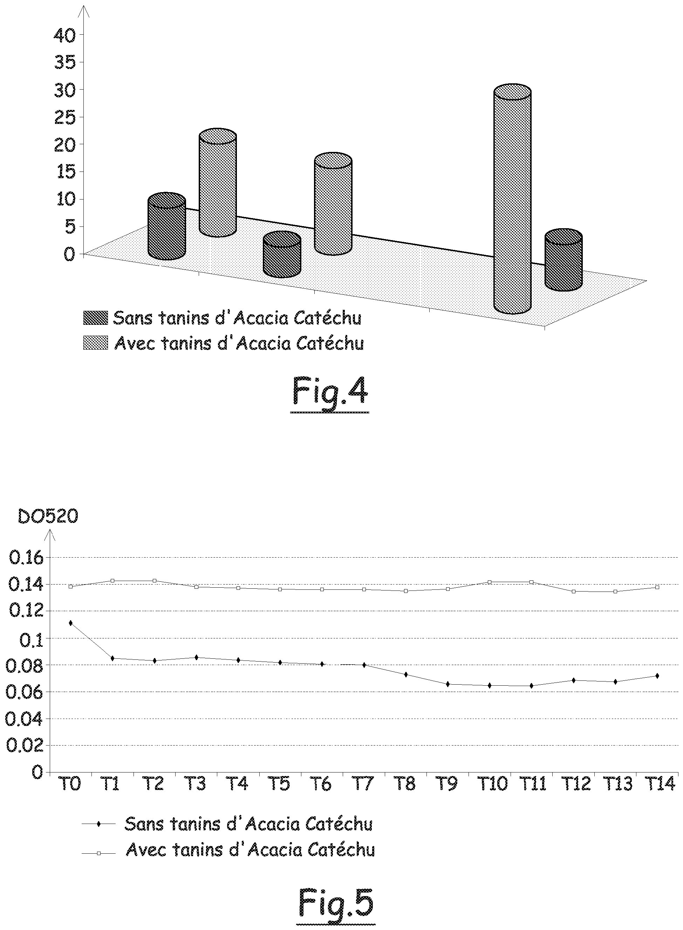

La figure 4 montre l'évolution de la couleur rouge de la solution modèle caractérisée par la densité optique DO 520, avec ou sans tanin d'Acacia Catechu (à 3g/L), et avec ou sans anhydride sulfureux SO₂ qui présente comme caractéristique de décolorer les anthocyanes lorsqu'elles sont sous leurs formes libres, c'est-à-dire combinées aux tanins catéchiques ou aux tanins épicatéchiques et leurs dérivés.

On constate que sans anhydride sulfureux, dans un premier temps le rajout des tanins extraits d'Acacia Catechu permet une augmentation de la couleur, la densité optique passant de 0,9 à 1,69. Ceci montre bien que ces tanins jouent un rôle important dans la stabilisation de la couleur des vins.

Après l'addition de SO₂ la solution non stabilisée par les tanins voit sa couleur rouge diminuer fortement (38,9%). Par contre l'ajout de la même quantité de SO₂ dans le milieu stabilisé par les tanins d'Acacia Catechu n'entraîne qu'une diminution de 8,3% de la couleur rouge.

La figure 5 montre l'action stabilisante du tanin d'Acacia Catechu au cours du temps sur la solution modèle par rapport à la chaleur. Une solution témoin et une solution contenant des tanins d'Acacia Catechu à une concentration de 3g/L, ont été maintenues pendant 8 heures, à 80°C au bain marie, et on a mesuré l'aspect rouge de la couleur par la mesure de la DO 520.

On constate que la couleur rouge est plus importante pour la solution avec les tanins et qu'elle reste stable au cours du temps, contrairement à la solution témoin où il y a une perte de couleur significative dans le temps. Ceci confirme encore l'action stabilisante des tanins utiles selon l'invention.

Ces différents essais montrent que les tanins utiles selon l'invention extraits d'Acacia Catechu présentent des propriétés oenologiques équivalentes à celles du tanin de raisin voire supérieures, et n'ont pas leurs inconvénients vis-à-vis de l'apparition de dérivés phénolés indésirables responsables de défauts olfactifs, car ils ne contiennent pas ou peu (moins de 10 ppm) d'acides paracoumariques et/ou féruliques, acides phénols présents en quantité non négligeable dans les tanins du raisin.

En outre ils sont économiquement beaucoup plus avantageux que le tanin de raisin. Selon l'invention ces tanins peuvent être utilisés en tant que produit oenologique, sur un moût de raisin, un moût encore en fermentation ou un vin afin de stabiliser la matière colorante.

Afin d'optimiser la rapidité de stabilisation de la matière colorante, il est utilisé des tanins comprenant au moins 30% d'unités (+) catéchine et/ou ses dérivés par rapport au total d'unités (+) catéchine, (-) épicatéchine et leurs dérivés, extraits d'Acacia Catechu. Ils peuvent également être utilisés pour améliorer la structure d'un vin, pour faciliter la clarification d'un vin en synergie avec un clarifiant, pour absorber des constituants protéiques indésirables du vin, pour une action antibactérienne et/ou pour une action antioxydante dans un vin.

L'utilisation se fait de préférence après dissolution dans l'eau afin de faciliter la bonne dispersion et homogénéisation du produit dans le moût, le moût encore en fermentation ou le vin.

Selon un mode préféré, la dissolution est de 1 partie de tanins pour 10 parties d'eau. Préférentiellement le produit est utilisé sous sa forme instantanée, traitement spécifique à la vapeur d'eau, qui facilite sa dissolution.

Selon l'invention, les doses préférées de tanins sont comprises entre 10 et 120g/hL.

Plus particulièrement, elles sont de 10 à 40g/hL pour des moûts ou vins présentant un bon équilibre tanins/anthocyanes, respectant le rapport de 1 molécule d'anthocyane pour 4 molécules de tanins ; et elles sont de 40 à 120g/hL pour les moûts ou vins présentant un certain déséquilibre dans leur rapport tanin/anthocyane, c'est-à-dire possédant moins de 4 molécules de tanin pour une molécule d'anthocyane pour des questions de maturité, d'origine ou d'état sanitaire du raisin à la vendange.

## Revendications

1. Utilisation en tant que produit oenologique d'un tanin proanthocyanidique de type phloroglucinol dont les monomères répondent à la formule (I) : 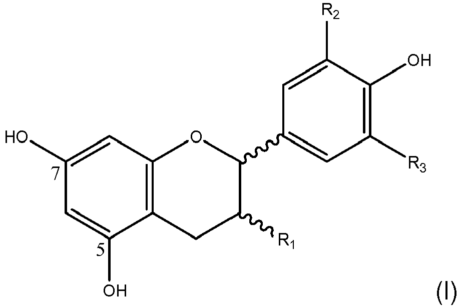 dans laquelle R₁, R₂ et R₃ représentent indépendamment soit un hydrogène soit un groupement hydroxyle,
extrait d'*Acacia Catechu,* contenant moins de 10ppm d'acides phénols type acide paracoumarique ou acide férulique et comprenant au moins 30% d'unités (+)catéchine et/ou ses dérivés par rapport au total d'unités (+)catéchine, (-)épicatéchine et leurs dérivés constituant ledit tanin.

2. Utilisation d'un tanin selon la revendication 1, **caractérisée en ce que** le tanin comprend au moins 50% d'unités (+)catéchine et/ou ses dérivés par rapport au total d'unités (+)catéchine, (-)épicatéchine et leurs dérivés constituant ledit tanin.

3. Utilisation d'un tanin proanthocyanidique selon l'une quelconque des précédentes revendications, **caractérisée en ce que** le tanin est incorporé dans un moût, un moût encore en fermentation ou un vin à raison de 10 à 120 g/hl.

4. Utilisation d'un tanin proanthocyanidique selon l'une quelconque des précédentes revendications, pour stabiliser la matière colorante d'un moût, d'un moût encore en fermentation ou d'un vin.

5. Utilisation d'un tanin proanthocyanidique selon l'une quelconque des précédentes revendications, pour améliorer la structure d'un vin.

6. Utilisation d'un tanin proanthocyanidique selon l'une quelconque des précédentes revendications pour une action antibactérienne et/ou antioxydante dans un vin.

## Patentansprüche

1. Verwendung als önologisches Produkt eines aus *Acacia catechu* extrahierten Proanthocyanidin-Tannins des Phloroglucin-Typs, dessen Monomere der Formel (I) entsprechen: 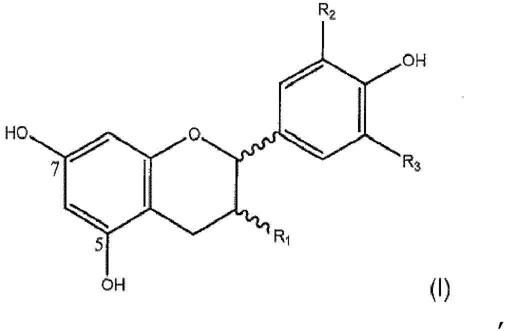 worin R₁, R₂ und R₃ unabhängig entweder ein Wasserstoffatom oder eine Hydroxylgruppe darstellen,
das weniger als 10 ppm Phenolsäuren des Paracumarsäure- oder Ferulasäure-Typs enthält und mindestens 30% Einheiten von (+)Catechin und/oder dessen Derivaten, bezogen auf die Gesamtmenge an (+)Catechin-, (-)Epicatechin-Einheiten und deren Derivate, die das Tannin bilden, umfasst.

2. Verwendung eines Tannins nach Anspruch 1, **dadurch gekennzeichnet, dass** das Tannin mindestens 50% Einheiten von (+)Catechin und/oder dessen Derivaten, bezogen auf die Gesamtmenge an (+)Catechin-, (-)Epicatechin-Einheiten und deren Derivate, die das Tannin bilden, umfasst.

3. Verwendung eines Proanthocyanidin-Tannins nach einem der vorhergehenden Ansprüche, **dadurch gekennzeichnet, dass** das Tannin in einen Most, einen noch in der Gärung befindlichen Most oder einen Wein zu 10 bis 120 g/hl eingebracht wird.

4. Verwendung eines Proanthocyanidin-Tannins nach einem der vorhergehenden Ansprüche zum Stabilisieren der Färbesubstanz eines Mostes, eines noch in der Gärung befindlichen Mostes oder eines Weins.

5. Verwendung eines Proanthocyanidin-Tannins nach einem der vorhergehenden Ansprüche zur Verbesserung der Struktur eines Weins.

6. Verwendung eines Proanthocyanidin-Tannins nach einem der vorhergehenden Ansprüche für eine antibakterielle und/oder antioxidative Wirkung in einem Wein.

## Claims

1. Use, as oenological product, of a proanthocyanidinic tannin of phloroglucinol type, the monomers of which correspond to the formula (I): 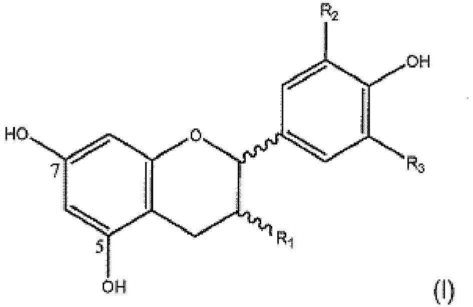 in which R₁, R₂ and R₃ independently represent either a hydrogen or a hydroxyl group,
extracted from *Acacia catechu,* containing less than 10 ppm of phenol acids of para-coumaric acid or ferulic acid type, and comprising at least 30% of (+)-catechin units and/or the derivatives thereof, relative to the total of units of (+)-catechin, (-)-epicatechin and the derivatives thereof constituting said tannin.

2. Use of a tannin according to Claim 1, **characterized in that** the tannin comprises at least 50% of (+)-catechin units and/or the derivatives thereof, relative to the total of units of (+)-catechin, (-)-epicatechin and the derivatives thereof constituting said tannin.

3. Use of a proanthocyanidinic tannin according to either one of the preceding claims, **characterized in that** the tannin is incorporated into a must, a must which is still fermenting, or a wine, at an amount of 10 to 120 g/hl.

4. Use of a proanthocyanidinic tannin according to any one of the preceding claims, for stabilizing the colouring matter of a must, a must which is still fermenting, or a wine.

5. Use of a proanthocyanidinic tannin according to any one of the preceding claims, for improving the structure of a wine.

6. Use of a proanthocyanidinic tannin according to any one of the preceding claims, for an antibacterial and/or antioxidant action in a wine.
